# FASCICULE DE BREVET EUROPEEN

(11) **EP 2 096 888 B1**
(45) Date de publication et mention de la délivrance du brevet: **20.10.2010**
(21) Numéro de dépôt: 09290149.5
(22) Date de dépôt: 02.03.2009
(51) Int. Cl.: H04W 24/04

(54) **Procédé de gestion du fonctionnement d'un équipement local relié à un réseau fixe et associé à un réseau cellulaire**
Verfahren zur Steuerung der Funktion einer lokalen Ausrüstung, die an ein Festnetz angeschlossen und mit einem Mobilnetz verbunden ist
Method for managing the operation of local equipment connected to a fixed network and associated with a cellular network

(30) Priorité: 28.02.2008 FR 0801097
(43) Date de publication de la demande: 02.09.2009
(73) Titulaire: Neuf Cegetel, 92100 Boulogne Billancourt (FR)
(72) Inventeur: Hamel, Alain, 92200 Neuilly sur Seine (FR)
(74) Mandataire: Beaudouin-Lafon, Emmanuel

(56) Documents cités:
- GB-A- 2 428 942
- US-A1- 2006 159 024
- US-B1- 6 229 985
- US-B1- 6 877 104

## Description

La présente invention concerne un procédé de gestion du fonctionnement d'un équipement local relié à un réseau fixe et associé à un réseau cellulaire.

### ARRIERE PLAN DE L'INVENTION

On sait que pour améliorer la capacité d'un réseau cellulaire, il est prévu d'intégrer au réseau cellulaire une cellule locale, dite femto par référence à sa très faible taille par rapport aux cellules habituelles du réseau, comportant un équipement local relié d'une part à un réseau fixe pouvant fonctionner en mode commuté ou en mode paquets et associé au réseau cellulaire au moyen d'un organe local de liaison sans fil. Lors d'une liaison normale correspondant à une liaison effective de l'équipement local avec le réseau fixe, l'organe local de liaison sans fil fonctionne en tant que station de base intégrée au réseau cellulaire. Ainsi, les organes de communication incorporés à l'équipement local, en particulier le téléphone sur Internet et l'accès à une messagerie Internet, sont en liaison directe avec le réseau fixe et un terminal mobile placé à portée de l'organe local de liaison sans fil est relié au réseau cellulaire par l'intermédiaire du réseau fixe.

Toutefois, lorsque différents opérateurs interviennent sur le réseau fixe, il est possible qu'au moment où un utilisateur installe l'équipement local, celui-ci ne soit pas encore reconnu par le réseau fixe, de sorte que l'utilisateur ne peut utiliser aucune des fonctions intégrées à l'équipement local. Il peut en outre survenir des situations dans lesquelles la liaison avec le réseau fixe est interrompue accidentellement de sorte que l'utilisateur est également privé des fonctions intégrées à l'équipement local.

### OBJET DE L'INVENTION

Un but de l'invention est de proposer un procédé de gestion du fonctionnement de l'équipement local permettant d'établir une liaison de secours lorsque la liaison normale est défaillante.

### RESUME DE L'INVENTION

En vue de la réalisation de ce but, on propose selon l'invention un procédé de gestion du fonctionnement d'un équipement local relié à un réseau fixe et associé à un réseau cellulaire comportant des stations de base, l'équipement local comportant un organe local de liaison sans fil qui, lors d'une liaison normale correspondant à une liaison effective de l'équipement local avec le réseau fixe, fonctionne en tant que station de base intégrée au réseau cellulaire, procédé selon lequel, lors d'une interruption de la liaison effective de l'équipe-ment local avec le réseau fixe, une liaison de secours est établie entre une station de base cellulaire du réseau cellulaire et l'organe local de liaison sans fil.

Ainsi, l'ensemble des signaux de communication sont échangés avec le réseau cellulaire, de sorte que l'équipement local continue à fonctionner en dépit de l'interruption de la liaison avec le réseau fixe.

En relation avec un terminal mobile associé au réseau cellulaire, lors de l'établissement d'une liaison de secours, le terminal mobile est mis en communication avec une station de base cellulaire du réseau cellulaire. Ainsi, toutes les fonctionnalités de l'équipement local restent en service.

Selon un autre aspect avantageux de l'invention, l'organe local de liaison sans fil est configuré pour établir la liaison normale et la liaison de secours en utilisant des composants communs. On minimise ainsi le coût de l'équipement local.

Selon encore un autre aspect avantageux de l'invention, lors d'un fonctionnement en liaison de secours, l'organe local de liaison sans fil a un fonctionnement limité à des applications nécessitant un faible débit. Ainsi, dans le cas où la liaison avec le réseau fixe est interrompue pour plusieurs équipements locaux, on évite une surcharge de la station de base cellulaire à laquelle les équipements locaux se trouvent simultanément associés par la liaison de secours.

De préférence, le procédé selon l'invention comporte l'étape d'effectuer de façon répétée une vérification d'un état de la liaison avec le réseau fixe et d'établir automatiquement la liaison normale ou la liaison de secours en fonction de la vérification effectuée. On évite ainsi toute interruption d'une communication pour des applications couvertes par la liaison de secours.

De préférence encore, en relation avec un équipement local comportant un organe de communication de voix sur Internet, lors de l'établissement d'une liaison de secours l'organe de communication de voix sur Internet est relié à un canal de voix de l'organe local de liaison sans fil. On compense ainsi la baisse de débit résultant du passage en liaison de secours par l'établissement d'une liaison sur un canal prioritaire.

### BREVE DESCRIPTION DES DESSINS

D'autres caractéristiques et avantages de l'invention ressortiront à la lecture de la description qui suit d'un mode de réalisation particulier non limitatif de mise en oeuvre du procédé selon l'invention, en relation avec les figures ci-jointes, parmi lesquelles :
- la figure 1 est une représentation schématique d'un équipement local et de sa relation avec un réseau fixe et un réseau cellulaire lors de l'établissement d'une liaison normale,
- la figure 2 est une représentation identique à celle de la figure 1, dans le cas de l'établissement d'une liaison de secours.

### DESCRIPTION DETAILLEE DE L'INVENTION

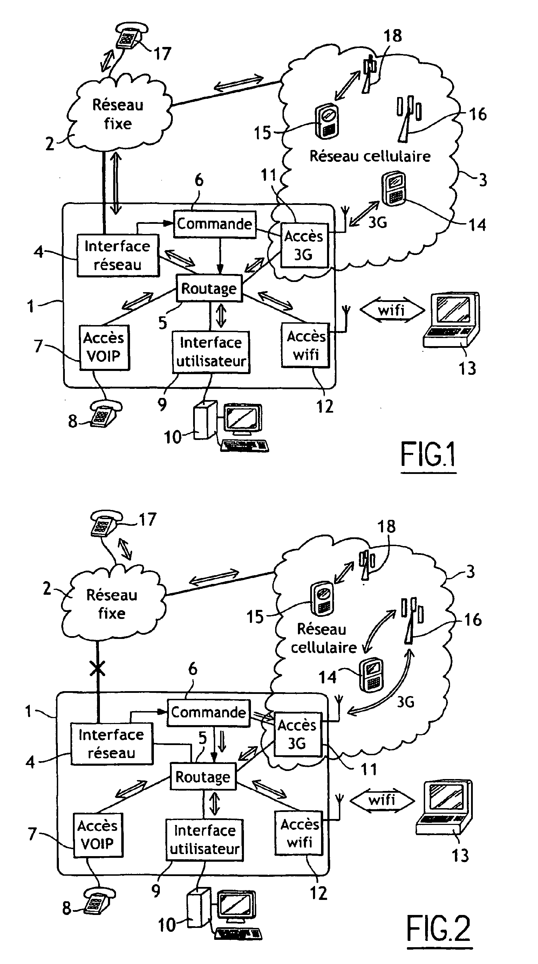

La figure 1 illustre la relation connue d'un équipement local 1 avec un réseau fixe 2 et un réseau cellulaire 3. Le procédé de l'invention concerne plus particulièrement un réseau fixe haut débit fonctionnant en mode paquets, c'est-à-dire selon la technologie actuelle, un réseau DSL ou un réseau câblé avec du câble coaxial ou de la fibre optique. L'équipement local 1 comporte une interface réseau 4 reliée à un organe de routage 5 et à un organe de commande 6. L'organe de commande est également relié à l'organe de routage auxquels sont par ailleurs reliés un organe de communication de voix sur Internet 7 relié à un poste téléphonique 8, une interface utilisateur 9 reliée à un ordinateur fixe 10, un premier organe local de liaison sans fil 11 fonctionnant selon un premier type de liaison sans fil correspondant au type de liaison sans fil du réseau cellulaire 3, par exemple une liaison 3G, et un second organe local de liaison sans fil 12 fonctionnant selon un second type de liaison sans fil, par exemple une liaison wifi, pour établir une liaison sans fil avec un ordinateur portable 13.

Lors d'un fonctionnement normal de l'équipement local, c'est-à-dire lorsqu'une liaison effective est établie entre l'équipement local 1 et le réseau fixe 2, tous les organes de liaison de l'équipement local 1 sont reliés au réseau fixe 2. Le premier organe local de liaison sans fil 11 fonctionne alors en tant que station de base d'une femto cellule correspondant à une sous-cellule intégrée dans une cellule définie par la portée d'une station de base cellulaire 16 du réseau cellulaire 3. Le premier organe local de liaison sans fil sert alors à établir la liaison avec un terminal mobile 14 qui se trouve à portée de l'organe local de liaison sans fil 11. Une mise en communication du terminal mobile 14 avec un second terminal mobile 15 en relation avec une station de base 18 du réseau cellulaire peut alors être réalisée en passant par le réseau fixe 2. Le poste téléphonique 8 comme le premier terminal mobile 14 peuvent en outre être mis en communication avec un poste fixe 17 relié au réseau fixe.

La figure 2 illustre le procédé selon l'invention lorsque la liaison entre l'équipement local 1 et le réseau fixe 2 est interrompue comme figuré par une croix en trait épais sur la figure 2.

Selon l'invention, l'organe de commande 6 effectue de façon répétée une vérification de la liaison de l'équipement local 1 avec le réseau fixe 2 et lorsqu'une interruption de cette liaison est détectée, l'organe de commande 6 commande l'établissement d'une liaison de secours par un basculement du fonctionnement du premier organe local de liaison sans fil 11 selon une fonction de terminal fixe du réseau cellulaire 3. Une liaison sans fil du premier type s'établit alors entre l'organe local de liaison sans fil 11 et la station de base 16 du réseau cellulaire.

Par ailleurs, la liaison du terminal mobile 14 avec le réseau cellulaire s'établit alors également par une liaison sans fil avec la station de base 16 du réseau cellulaire.

On notera qu'il serait alors possible de maintenir toutes les fonctionnalités de l'équipement local 1 avec seulement une perte de performance liée à la différence de débit de la liaison sans fil avec le réseau cellulaire comparée à la liaison filaire avec le réseau fixe. Dans le cas où l'interruption de la liaison avec le réseau fixe concerne simultanément un grand nombre d'équipements locaux, l'établissement d'une liaison de secours de chacun des équipements locaux avec la même station de base 16 du réseau cellulaire risquerait toutefois de provoquer une surcharge de la station de base 16.

Pour éviter une telle surcharge, l'organe de commande 6 commande de préférence l'organe de routage 5 lors de l'établissement d'une liaison de secours pour que les applications autorisées soient limitées aux applications prioritaires nécessitait un faible débit, en particulier les communications de voix et la consultation de la messagerie.

Il est rappelé à ce propos que lors d'une liaison normale, l'organe de communication de voix sur Internet utilise un canal de données de la liaison avec le réseau fixe, lequel a un débit suffisant pour acheminer de façon satisfaisante des signaux de voix sur le canal de données. En revanche, l'organe local de liaison sans fil 11 a un canal de données présentant un débit trop faible pour acheminer de façon satisfaisante des signaux de voix. Lors de l'établissement de la liaison de secours, l'organe de commande 6 commande donc également au niveau de l'organe de routage un basculement de la liaison de l'organe de communication de voix sur Internet 7 vers le canal de voix de l'organe local de liaison sans fil 11. Ceci permet en outre d'utiliser des composants communs de l'organe local de liaison 11 pour l'établissement d'une liaison normale et d'une liaison de secours.

Pendant le fonctionnement de l'équipement local en liaison de secours, l'organe de commande 6 continue de vérifier de façon répétée l'état de la liaison avec le réseau fixe 2 et lorsque celle-ci est rétablie, l'organe de commande 6 commande automatiquement l'établissement d'une liaison normale.

Bien entendu, l'invention n'est pas limitée au mode de réalisation décrit et on peut y apporter des variantes de réalisation sans sortir du cadre de l'invention tel que défini par les revendications.

En particulier, bien que l'invention ait été décrite en prévoyant une réduction des applications mises en service lors de l'établissement d'une liaison de secours, on peut prévoir de mesurer le débit disponible avec la station de base 16 et d'adapter les applications en service à ce débit disponible.

## Revendications

1. Procédé de gestion du fonctionnement d'un équipement local (1) relié à un réseau fixe (2) et associé à ùn réseau cellulaire (3) comportant des stations de base (16, 18), l'équipement local comportant un organe local de liaison sans fil (11) qui, lors d'une liaison normale correspondant à une liaison effective de l'équipement local avec le réseau fixe, fonctionne en tant que station de base intégrée au réseau cellulaire, **caractérisé en ce que** lors d'une interruption de la liaison effective de l'équipement local (1) avec le réseau fixe (2), une liaison de secours est établie entre une station de base cellulaire (16) du réseau cellulaire et l'organe local de liaison sans fil (11).

2. Procédé selon la revendication 1, en relation avec un terminal mobile (14) associé au réseau cellulaire (3), **caractérisé en ce que** lors de l'établissement d'une liaison de secours, le terminal mobile (14) est mis en communication avec la station de base cellulaire (16) du réseau cellulaire.

3. Procédé selon la revendication 1, **caractérisé en ce que** l'organe local de liaison sans fil (11) est configuré pour établir la liaison normale et la liaison de secours en utilisant des composants communs.

4. Procédé selon la revendication 1, **caractérisé en ce que** lors d'un fonctionnement en liaison de secours, l'organe local de liaison sans fil (11) a un fonctionnement limité à des applications nécessitant un faible débit.

5. Procédé selon la revendication 1, **caractérisé en ce qu'**il comporte l'étape d'effectuer de façon répétée une vérification d'un état de la liaison avec le réseau fixe (2) et d'établir automatiquement la liaison normale ou la liaison de secours en fonction de la vérification effectuée.

6. Procédé selon la revendication 1, en relation avec un équipement local (1) comportant un organe de communication de voix sur Internet (7), **caractérisé en ce que** lors de l'établissement d'une liaison de secours l'organe de communication de voix sur Internet (7) est relié à un canal de voix de l'organe local de liaison sans fil (11).

## Claims

1. A method of managing the operation of local equipment (1) connected to a fixed network (2) and associated with a cellular network (3) including base stations (16, 18), the local equipment including a local wireless connection member (11) that, during a normal connection corresponding to a functioning connection between the local equipment and the fixed network, operates as a base station incorporated in the cellular network, the method being **characterized in that**, during an interruption of the functioning connection between the local equipment (1) and the fixed network (2), an emergency connection is established between a cellular base station (16) of the cellular network and the local wireless connection member (11).

2. A method according to claim 1, with a mobile terminal (14) associated with the cellular network (3), the method being **characterized in that** while setting up an emergency connection, the mobile terminal (14) is put into communication with the base station (16) of the cellular network.

3. A method according to claim 1, **characterized in that** the local wireless connection member (11) is configured to establish the normal connection and the emergency connection while using components in common.

4. A method according to claim 1, **characterized in that** during operation with an emergency connection, the local wireless connection member (11) has its operation limited to applications that require a low data rate.

5. A method according to claim 1, **characterized in that** it includes the step of repeatedly verifying the state of the connection with the fixed network (2) and of automatically setting up the normal connection or the emergency connection as a function of the verification performed.

6. A method according to claim 1, with local equipment (1) including a VOIP communications member (7), the method being **characterized in that** while setting up an emergency connection, the VOIP communications member (7) is connected to a voice channel of the local wireless connection member (11).

## Patentansprüche

1. Verfahren zur Steuerung des Betriebs einer lokalen Ausrüstung (1), die an ein Festnetz (2) angeschlossen und mit einem Mobilnetz (3) verbunden ist, das Basisstationen (16, 18) umfasst, wobei die lokale Ausrüstung ein drahtloses lokales Verbindungselement (11) umfasst, das bei einer normalen Verbindung, die einer wirksamen Verbindung der lokalen Ausrüstung mit dem Festnetz entspricht, als Basisstation funktioniert, die in das Mobilnetz integriert ist, **dadurch gekennzeichnet, dass** bei einer Unterbrechung der wirksamen Verbindung der lokalen Ausrüstung (1) mit dem Festnetz (2) eine Ersatzverbindung zwischen einer Mobil-Basisstation (16) des Mobilnetzes und dem drahtlosen lokalen Verbindungselement (11) hergestellt wird.

2. Verfahren nach Anspruch 1, in Verbindung mit einem mobilen Terminal (14), das mit dem Mobilnetz (3) verbunden ist, **dadurch gekennzeichnet, dass** bei der Herstellung einer Ersatzverbindung das mobile Terminal (14) mit der Mobil-Basisstation (16) des Mobilnetzes in Kommunikation gebracht wird.

3. Verfahren nach Anspruch 1, **dadurch gekennzeichnet, dass** das drahtlose lokale Verbindungselement (11) derart konfiguriert ist, dass es die normale Verbindung und die Ersatzverbindung unter Verwendung gemeinsamer Komponenten herstellt.

4. Verfahren nach Anspruch 1, **dadurch gekennzeichnet, dass** das drahtlose lokale Verbindungselement (11) bei einem Betrieb mit Ersatzverbindung einen Betriebszustand hat, der auf Anwendungen beschränkt ist, die einen geringen Durchsatz benötigen.

5. Verfahren nach Anspruch 1, **dadurch gekennzeichnet, dass** es den Schritt des wiederholten Ausführens einer Prüfung eines Zustandes der Verbindung mit dem Festnetz (2) und des automatischen Herstellens der normalen Verbindung oder der Ersatzverbindung in Abhängigkeit von der durchgeführten Prüfung umfasst.

6. Verfahren nach Anspruch 1, in Verbindung mit einer lokalen Ausrüstung (1), die ein Element (7) zur Stimmkommunikation über das Internet umfasst, **dadurch gekennzeichnet, dass** bei der Herstellung einer Ersatzverbindung das Element (7) zur Stimmkomxnunikation über das Internet mit einem Stimmkanal des drahtlosen lokalen Verbindungselements (11) verbunden ist.
